# EUROPEAN PATENT APPLICATION

(11) **EP 2 913 973 A1**
(43) Date of publication of application: **02.09.2015**
(21) Application number: 14157090.3
(22) Date of filing: 27.02.2014
(51) Int. Cl.: H04L 29/06, H04L 9/32, H04W 12/10

(54) **Trusted NFC smart poster tag**

(71) Applicant: NXP B.V., 5656 AG Eindhoven (NL)
(72) Inventor: Meyn, Hauke, 5656 AG Eindhoven (NL); Gallo, Francesco, 5656 AG Eindhoven (NL); Lesjak, Christian, 5656 AG Eindhoven (NL)
(74) Representative: Krott, Michel

(57) **Abstract**

There is described an NFC smart poster tag comprising (a) a memory adapted to store tag data, a counter value, a private key (117) and a certificate corresponding to the private key (117), (b) a signature engine (116) adapted to generate a signature value based on selected data and the private key, and (c) a message engine adapted to generate an NDEF message (111) in response to the tag (110) receiving a corresponding request from an external device (120), the NDEF message (111) comprising a first record (112) and a second record (113). The message engine is further adapted to (c1) copy at least a part of the tag data from the memory to the first record (112), (c2) update the counter value and store the updated counter value (COUNTER-VALUE) in the first record (112), (c3) call the signature engine (116) to calculate a first signature value (SIG VALUE A) based on the part of the tag data copied to the first record (112), the updated counter value (COUNTER-VALUE), and the private key (117), (c4) store the first signature value (SIG VALUE A) in the first record (112), (c5) call the signature engine (116) to calculate a second signature value (SIG VALUE B) based on the first record (112) and the private key (117), (c6) store the second signature value (SIG VALUE B) in the second record (113), and (c7) copy the certificate (CERTIFICATE) corresponding to the private key (117) from the memory to the second record (113). There is also described a trusted smart poster system, a method of generating an NDEF message in an NFC smart poster tag, and a method of verifying authenticity and integrity in a smart poster system.

## Description

### FIELD OF THE INVENTION

The present invention relates to the field of NFC communication devices, in particular to NFC Smart Poster tags and to NFC Smart Poster systems.

### ART BACKGROUND

NFC Smart Posters are objects in or on which readable NFC tags have been placed. An NFC Smart Poster can come in many forms - it can be a poster, billboard, magazine page, even a three-dimensional object. The common factor is an NFC tag that has an NDEF (NFC Data Exchange Format) message stored in it and is attached to or embedded in the desired medium. This small tag with information is read when an NFC device is held close to it. Examples include a poster with a web address for buying sports tickets, a timetable displayed at a bus stop, and coupons inserted in a magazine advertisement. A Smart Poster could even be a statue of a movie wizard character with an NFC tag embedded into the end of its wand.

Current NFC Smart Poster systems, such as the one described in EP 2 248 629 A1, are vulnerable to attackers, i.e. anyone whose behaviour aims at circumventing the intended purpose of the system. Such party has many possibilities to exploit the system, e.g. by modifying the software running on a phone when reading an NFC Smart Poster tag. More specifically, current NFC Smart Poster systems suffer from at least the following problems:
(1) Current tags support the storage of static content, and can be set to read only. As the content is static, an attacker is able to copy this content to an arbitrary NFC tag. A reading device cannot verify whether the tag is authentic, i.e. the specific tag to which the content was originally written to. An attacker could thus have copied this content to any number of other NFC tags. Example: If an NFC tag is attached to a product to verify its origin, static content that can be easily copied to counterfeit products does not help the reader to verify the authenticity of the tag.
(2) An attacker might forge the content of a tag. This may be done by modifying the content of the tag (if the tag is not read-only), or by replacing the tag with a tag having modified content. Example 1: If the NDEF message contained on the tag provides a URL pointing to website of a bank, the attacker might replace the URL with one pointing to a malicious website used for password fishing. Example 2: If the NDEF message contained on the tag provides a phone number to which the user can send an SMS in order to access a service, an attacker might point the phone number to an expensive, malicious number that bills the user without providing service.
(3) Current digital certificates, which are mainly based on X.509, consume some hundred bytes of data. In order for a reader, such as a phone, to verify the authenticity and integrity of a tag, it requires the digital certificate that corresponds to the digital signature that protects the tag's content. Retrieving large certificates requires corresponding storage resources on the tag, and results in longer data transfer times while reading.
(4) A challenge response where the relying party (the phone and its user) presents the NFC tag a challenge, such as a nonce, to be signed in order to proof its authenticity requires multiple communication steps. Accordingly, the use of challenge response protocols for tag and/or content authentication is complex and, furthermore, lacks NFC Forum support.
(5) The server receives the incoming request, which may have several parameters encoded as part of an URI (Universal Resource Identifier), such as a counter value or a tag ID. In current systems, these parameters are not protected and may be arbitrarily modified by an attacker. Thus, the server cannot rely on these parameters being genuine. More specifically, the server cannot be sure that the incoming request originates from the tag having the received tag ID, nor can it rely on the received counter value as a statistical measure of tag usage.

There may be a need for NFC Smart Poster tags and systems that overcome the above drawbacks.

### SUMMARY OF THE INVENTION

This need may be met by the subject matter according to the independent claims. Advantageous embodiments of the present invention are set forth in the dependent claims.

According to a first aspect there is provided an NFC smart poster tag. The NFC smart poster tag comprises (a) a memory adapted to store tag data, a counter value, a private key and a certificate corresponding to the private key, (b) a signature engine adapted to generate a signature value based on selected data and the private key, and (c) a message engine adapted to generate an NDEF message in response to the tag receiving a corresponding request from an external device, the NDEF message comprising a first record and a second record. The message engine is further adapted to (c1) copy at least a part of the tag data from the memory to the first record, (c2) update the counter value and store the updated counter value in the first record, (c3) call the signature engine to calculate a first signature value based on the part of the tag data copied to the first record, the updated counter value, and the private key, (c4) store the first signature value in the first record, (c5) call the signature engine to calculate a second signature value based on the first record and the private key, (c6) store the second signature value in the second record, and (c7) copy the certificate corresponding to the private key from the memory to the second record.

This aspect is based on the idea that the NFC smart poster tag dynamically generates an NDEF message containing two records, a first and a second record. The first record contains tag data, an updated counter value, and a first signature value. The latter is generated using the private key on the tag data and updated counter value, such that these can be verified at a smart poster server by using a certificate corresponding to the private key. The second record contains a second signature value and a certificate corresponding to the private key. The second signature value is generated using the private key on the first record, such that the first record can be verified at a smart poster reader device, such a as a mobile phone, by using the certificate of the second record. In other words, a smart poster reader device receiving the NDEF message generated by the tag may use the contents of the second record to verify the authenticity and integrity of the first record. If the verification is successful, the smart poster reader device may forward the contents of the first record to a smart poster server, which in turn may verify the received tag data and counter value using the also received first signature value and a certificate corresponding to the private key. Thereby, verification of authenticity and integrity can be provided in a way where the smart poster reader device does neither read nor alter the contents of the first record but verifies the same using the contents of the second record.

According to an embodiment, the tag data comprises a tag identifier and at least one parameter value.

The tag identifier is preferably a unique number assigned to and stored in the tag at production to uniquely identify the tag.

The at least one parameter value may comprise parameter value(s) of relevance to a smart poster system, such as a link to a corresponding smart poster server, geographic information, etc.

According to a further embodiment, the tag data, the updated counter value and the first signature value of the first record form a unique resource identifier.

The unique resource identifier (URI) may be opened in a standard browser application to generate and transmit a request to a network device, such as a smart poster server, identified by the URI. The request also contains further tag data and the counter value in an encoded form.

According to a further embodiment, the message engine is adapted to update the counter value by incrementing the counter value and/or by calculating an updated counter value in accordance with a predetermined function.

More specifically, the counter value may be updated by incrementing the counter value. The update of the counter value may also consist in incrementing the counter value and applying a predetermined function, such as a pseudo random number generator or a hash function, to the incremented counter value in order to generate the updated counter value that is stored in the first record of the NDEF message. In this case, the incremented counter value may be stored in the memory, thereby representing the number of requests received by the tag from external devices. Finally, the update of the counter value may solely consist in calculation of the updated counter value in accordance with the predetermined function, e.g., a pseudo random number generator.

According to a further embodiment, the certificate is an ECQV implicit certificate.

The use of ECQV (Elliptic Curve Qu-Vanstone) implicit certificates enables verification of authenticity and integrity while keeping the needed memory and communication resource requirements for storing and transmitting the certificate as low as around 60 bytes (Signature RTD V2 Draft).

According to a further embodiment, the tag further comprises a transceiver unit adapted to receive the request from the external device and to transmit the NDEF message generated by the message engine.

The transceiver comprises antenna and circuitry for communication with an external device, such as an NFC enabled mobile phone.

According to a second aspect, there is provided a trusted NFC smart poster system. The system comprises (a) an NFC smart poster tag according to the first aspect or any of the above embodiments, (b) a mobile device, and (c) a server. The NFC smart poster tag is adapted to generate the NDEF message in response to receiving a request from the mobile device, and to transmit the generated NDEF message to the mobile device. The mobile device is adapted to verify an NDEF message received from the NFC smart poster tag based on the second record, extract a unique resource identifier from the received NDEF message by reading the first record, and generate and transmit a request to the server based on the extracted unique resource identifier, the request comprising the tag data, updated counter value and first signature value of the first record. The server is adapted to verify a request received from the mobile device.

This aspect is essentially based on the same idea as the first aspect described above, i.e. that the NFC smart poster tag dynamically generates an NDEF message containing two records, a first and a second record. The mobile device verifies the authenticity and integrity of the received NDEF message using the contents of the second record, and the server verifies a request received from the mobile device.

According to an embodiment, the mobile device comprises a mobile device root certificate and a browser application, and the mobile device is adapted to (a) transmit a request for an NDEF message to the NFC smart poster tag, (b) receive a corresponding NDEF message from the NFC smart poster tag, (c) verify the first record of the received NDEF message by determining whether the second signature value and the certificate of the second record correspond to each other, (d) verify the certificate of the second record by applying the mobile device root certificate, and (e) provided that both the first record of the received NDEF message and the certificate of the second record are verified, extract the unique resource identifier from the received NDEF message and open the extracted unique resource identifier in the browser application, thereby transmitting the request to the server.

By applying the mobile device root certificate, the mobile device is capable of verifying the integrity and authenticity of the certificate of the second record of the received NDEF message. Thereby, it is possible for the mobile device to verify both the integrity and authenticity of the first record of the NDEF message as well as the integrity and authenticity of the certificate used to perform the first verification. This two-step verification assures that the tag and the message received from the tag are authentic and integer, i.e. the tag has not been replaced or copied and its contents have not been altered.

According to a further embodiment, the server is adapted to verify a request received from the mobile device by determining whether the first signature value and a server certificate correspond to each other.

By determining whether the first signature value and the server certificate correspond to each other, the server can verify the authenticity and integrity of the data contained in the received request, i.e. the server is able to determine whether the data contained in the request have been modified on its way from the tag to the server, e.g. by the mobile device.

According to a further embodiment, the server comprises a server certificate database. The server is adapted to obtain the server certificate from the server certificate database based on the tag data.

In particular, the server certificate database may contain a server certificate for each tag in the smart poster system. By reading out a tag ID from the received tag data, the server can retrieve the server certificate corresponding to the tag that generated the NDEF message which resulted in the request received at the server.

According to a third aspect, there is provided a method of generating an NDEF message in an NFC smart poster tag in response to a corresponding request from a mobile device, the NFC smart poster tag comprising a memory adapted to store tag data, a counter value, a private key and a certificate corresponding to the private key, the NFC smart poster tag further comprising a signature engine adapted to generate a signature value based on selected data and the private key, and a message engine adapted to generate an NDEF message comprising a first record and a second record. The method comprises (a) copying at least a part of the tag data from the memory to the first record, (b) updating the counter value and storing the updated counter value in the first record, (c) calling the signature engine to calculate a first signature value based on the part of the tag data copied to the first record, the updated counter value, and the private key, (d) storing the first signature value in the first record, (e) calling the signature engine to calculate a second signature value based on the first record and the private key, (f) storing the second signature value in the second record, and (g) copying the certificate corresponding to the private key from the memory to the second record.

This aspect is based on the same idea as the first aspect described above.

The method may in particular be implemented in an NFC smart poster tag according to the first aspect and any of the embodiments thereof as described above.

According to a fourth aspect, there is provided a method of verifying authenticity and integrity in a smart poster system, the smart poster system comprising an NFC smart poster tag, a mobile device, and a server, the NFC smart poster tag comprising a memory adapted to store tag data, a counter value, a private key and a certificate corresponding to the private key, the NFC smart poster tag further a signature engine adapted to generate a signature value based on selected data and the private key, and a message engine adapted to generate an NDEF message comprising a first record and a second record. The method comprises (a) transmitting a request for an NDEF message from the mobile device to the NFC smart poster tag, (b) in response to receiving the request at the NFC smart poster tag, generating a corresponding NDEF message by (b1) copying at least a part of the tag data from the memory to the first record, (b2) updating the counter value and storing the updated counter value in the first record, (b3) calling the signature engine to calculate a first signature value based on the part of the tag data copied to the first record, the updated counter value, and the private key, (b4) storing the first signature value in the first record, (b5) calling the signature engine to calculate a second signature value based on the first record and the private key, (b6) storing the second signature value in the second record, and (b7) copying the certificate corresponding to the private key from the memory to the second record, (c) transmitting the generated NDEF message from the NFC smart poster tag to the mobile device, (d) at the mobile device, verifying the NDEF message received from the NFC smart poster tag based on the second record, (e) extracting a unique resource identifier from the received NDEF message by reading the first record, (f) generating a request to the server based on the extracted unique resource identifier, the request comprising the tag data, updated counter value and first signature value of the first record, (g) transmitting the generated request to the server, and (h) verifying the request at the server.

This aspect is essentially based on the same idea as the preceding aspects described above and constitutes, in particular, the operation of a smart poster system in accordance with the second aspect.

It should be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular a combination of features of the method type claims and features of the apparatus type claims, is also disclosed with this document.

The aspects defined above and further aspects of the present invention will be apparent from the examples of embodiment to be described hereinafter and are explained with reference to the examples of embodiment. The invention will be described in more detail hereinafter with reference to examples of embodiment to which the invention is, however, not limited.

### BRIEF DESCRIPTION OF THE DRAWING

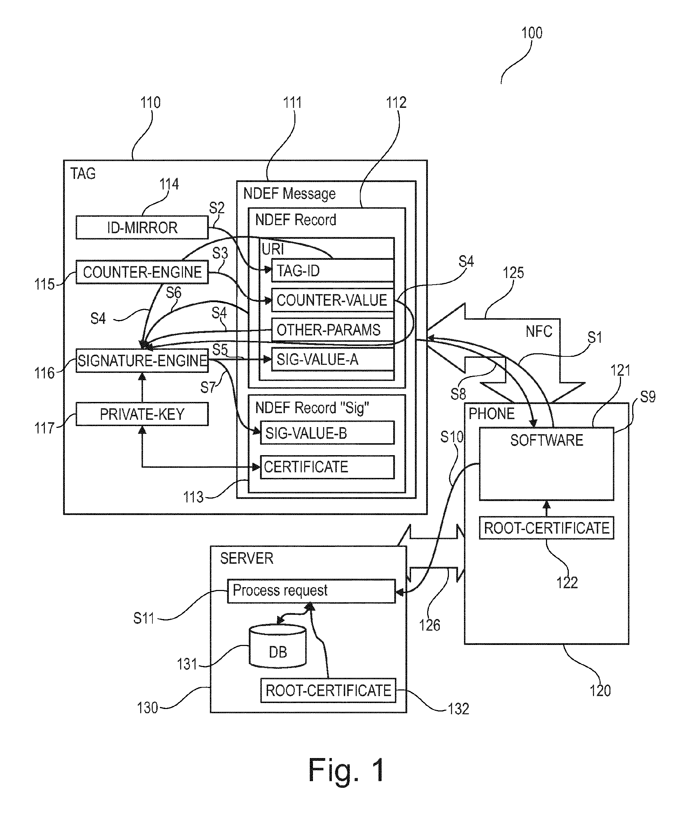

Figure 1 shows an overview of a system and its operation in accordance with an embodiment.

### DETAILED DESCRIPTION

The illustration in the drawing is schematic. It is noted that in different figures, similar or identical elements are provided with the same reference signs or with reference signs, which differ only within the first digit.

Figure 1 shows an overview of a system 100 and its operation in accordance with an embodiment. The system 100 comprises an NFC smart poster tag 110, a mobile device 120, and a smart poster server 130. The smart poster tag 110 comprises memory (not shown) storing a private key 117, and a processing unit (not shown) capable of performing the functions ID-MIRROR 114, COUNTER-ENGINE 115, and SIGNATURE-ENGINE 116. The private key 117, which is stored securely inside the tag 110, is preconfigured on the tag 110 at system initialization, and corresponds to a public key and a CERTIFICATE. The CERTIFICATE is issued by the entity that is represented by the ROOT-CERTIFICATE 122, 132. The CERTIFICATE is based on ECQV implicit certificates, and may use the minimal encoding scheme as defined in the Signature RTD Version 2 Draft. Thereby, the size of the certificate can be drastically reduced (from a few hundred to approx. 60 bytes).

The processing unit is capable of generating an NDEF message 111 comprising a first record 112 and a second record 113 as will be described in further detail below. The functionality ID-MIRROR 114 copies a TAG-ID that uniquely identifies the tag in the context of the system 100 into the NDEF message 111 at a predefined location, as shown in Figure 1. The COUNTER-ENGINE 115 updates the COUNTER-VALUE (according to a specific rule as described further below) upon each tag read, and incorporates it into the NDEF message 111 at a predefined location, as shown in Figure 1. The SIGNATURE-ENGINE 116, using the private key 117, i.e. a pre-defined, secret key, is capable of calculating a digital signature value over a pre-defined memory area of the NDEF message 111, and then incorporating this signature value into the NDEF message 111 at a predefined location. The signature is based on asymmetric cryptography, such as ECDSA, where a secret, private key is stored securely inside the tag, and the corresponding public key can be distributed via a digital certificate.

The mobile device 120, e.g. a mobile phone, comprises software 121 and a mobile device root certificate 122. The server 130 comprises a processing unit (not shown) capable of processing requests received from the mobile device 120, a certificate database 131, and a server root certificate 132. The tag 110 and the mobile device 120 are capable of performing communication as NFC Forum devices as indicated by arrow 125. Furthermore, the mobile device 120 is capable of communicating with the server 130 through a network 126, such as the Internet.

In operation, the system 100 operates as follows:
At step S1, the mobile device 120 is brought into range of the NFC smart poster tag 110 and sends a request for an NDEF message to the tag 110. In response to the request, the tag 110 dynamically prepares the NDEF message in the following steps S2-S7.

More specifically, at step S2 the tag 110 incorporates the TAG-ID into the URI inside the first record 112 of the NDEF message 111, using the ID-MIRROR functionality 114. The TAG-ID is used by the server 130 to know which tag 110 was involved.

At step S3, the counter value is calculated (e.g. increased) and incorporated as the current COUNTER-VALUE into the URI inside the first record 112 of the NDEF message 111, using the COUNTER-ENGINE functionality 115.

The counter value may simply be increased. However, the counter value generated must not be in an obvious form. It could also be a pseudo-random number (obfuscated counter value) or encrypted using a secret key (encrypted counter value). Such counter value is derived from a tag-internal, private counter, by applying a hash or encryption function. Thereby, it is more difficult for an attacker to know the current value and the number of tag taps would be kept private. As the server 130 knows the rule according to which the obfuscated counter value is being generated, it can still derive from it the actual value (i.e. number of tag touches).

For a counter value obfuscated by a hash function, this is achieved by calculating the hash for a range of expected next counter values (depending on previous values), and comparing these hash values with the received counter value. If two hashes match, the server knows what actual value was transferred in the COUNTER-VALUE field.

For an encrypted COUNTER-VALUE, the server takes the corresponding secret or private key to recover the actual value (= number of taps).

Then, at step S4 the TAG-ID, COUNTER-VALUE, and OTHER-PARAMS of the first record 112 of the NDEF message 111 are forwarded to the signature engine 116. Using the private key 117 which corresponds to the CERTIFICATE in the second record 113 of the NDEF message 111, a first signature value is generated.

At step S5, the generated fist signature value is written into the SIG-VALUE-A field of the first record 112 that is part of the URI.

Then, at step S6 the first record 112 of the NDEF message 111, which contains the URI, is forwarded to the signature engine 116. Using the private key 117 which corresponds to the CERTIFICATE in the second record 113 of the NDEF message 111, a second signature value is generated.

At step S7, the generated second signature value is written into the SIG-VALUE-B field of the second record 113, i.e. the Signature NDEF record (NDEF Record "Sig").

At step S8, the tag 110 carries out the necessary steps to transfer the content of the NDEF message 111 to the mobile device 120. Due to the small size of the ECQV implicit certificate (CERTIFICATE), transfer and data processing effort is reduced in comparison to conventional approaches.

After receiving the NDEF message 111, the software 121 of the mobile device, at step S9, performs the following: (i) Verify the integrity and authenticity of the first NDEF record 112 containing the URI, using the second signature value SIG-VALUE-B and the corresponding CERTIFICATE stored in the second record 113. (ii) Verify the integrity and authenticity of the CERTIFICATE using the ROOT-CERTIFICATE 122. (iii) If any of the above steps fails, consider the NDEF message 111 as not authentic or integer; and stop. Now the NDEF message 111, containing the URI, as well as the tag 110 itself, can be considered authentic and integer.

At step S10, the URI is extracted from the NDEF message 111. The URI is accessed by e.g. opening a browser software on the mobile device 120. Thereby, by this request, the parameters encoded inside the URI, respectively TAG-ID, COUNTER-VALUE, OTHER-PARAMS, and SIG-VALUE-A get implicitly transferred to the server 130.

Finally, at step S11 the server 130 verifies the authenticity and integrity of the parameters of the request received from the mobile device 120: (i) The server 130 queries its database 131 to retrieve the CERTIFICATE that corresponds to the TAG-ID. (ii) Using the retrieved CERTIFICATE and the contained public key (that corresponds to the PRIVATE-KEY), the authenticity and integrity of the request parameters are verified.

At this point, the server 130 can consider all parameters authentic and integer. The COUNTER-VALUE may be used for statistical measures about how often the smart phone was accessed, or to disallow multiple accesses on a single URL.

It is noted that, unless otherwise indicated, the use of terms such as "upper", "lower", "left", and "right" refers solely to the orientation of the corresponding drawing.

It is noted that the term "comprising" does not exclude other elements or steps and that the use of the articles "a" or "an" does not exclude a plurality. Also elements described in association with different embodiments may be combined. It should also be noted that reference signs in the claims should not be construed as limiting the scope of the claims.

## Claims

1. An NFC smart poster tag (110), the tag comprising
a memory adapted to store tag data, a counter value, a private key (117) and a certificate corresponding to the private key (117),
a signature engine (116) adapted to generate a signature value based on selected data and the private key, and
a message engine adapted to generate an NDEF message (111) in response to the tag (110) receiving a corresponding request from an external device (120), the NDEF message (111) comprising a first record (112) and a second record (113), wherein the message engine is further adapted to
copy at least a part of the tag data from the memory to the first record (112), update the counter value and store the updated counter value (COUNTER-VALUE) in the first record (112),
call the signature engine (116) to calculate a first signature value (SIG-VALUE-A) based on the part of the tag data copied to the first record (112), the updated counter value (COUNTER-VALUE), and the private key (117),
store the first signature value (SIG-VALUE-A) in the first record (112), call the signature engine (116) to calculate a second signature value (SIG-VALUE-B) based on the first record (112) and the private key (117),
store the second signature value (SIG-VALUE-B) in the second record (113), and
copy the certificate (CERTIFICATE) corresponding to the private key (117) from the memory to the second record (113).

2. The tag according to the preceding claim, wherein the tag data comprises a tag identifier(TAG-ID) and at least one parameter value (OTHER-PARAMS).

3. The tag according to any of the preceding claims, wherein the tag data, the updated counter value (COUNTER-VALUE) and first signature value (SIG-VALUE-A) of the first record (112) form a unique resource identifier (URI).

4. The tag according to any of the preceding claims, wherein the message engine is adapted to update the counter value by incrementing the counter value and/or by calculating an updated counter value in accordance with a predetermined function.

5. The tag according to any of the preceding claims, wherein the certificate is an ECQV implicit certificate.

6. The tag according to any of the preceding claims, further comprising a transceiver unit adapted to receive the request from the external device and to transmit the NDEF message generated by the message engine.

7. A trusted NFC smart poster system (100), the system comprising
an NFC smart poster tag (110) according to any of the preceding claims,
a mobile device (120), and
a server (130),
wherein the NFC smart poster tag (110) is adapted to generate the NDEF message (111) in response to receiving a request from the mobile device (120), and to transmit the generated NDEF message (111) to the mobile device (120),
wherein the mobile device (120) is adapted to verify an NDEF message (111) received from the NFC smart poster tag (110) based on the second record (113), extract a unique resource identifier (URI) from the received NDEF message (111) by reading the first record (112), and generate and transmit a request to the server (130) based on the extracted unique resource identifier (URI), the request comprising the tag data (TAG-ID, OTHER-PARAMS), updated counter value (COUNTER-VALUE) and first signature value (SIG-VALUE-A) of the first record (112), and
wherein the server (130) is adapted to verify a request received from the mobile device (120).

8. The system (100) according to the preceding claim, wherein the mobile device (120) comprises a mobile device root certificate (122) and a browser application, and wherein the mobile device (120) is adapted to
transmit a request for an NDEF message to the NFC smart poster tag (110),
receive a corresponding NDEF message from the NFC smart poster tag (110), verify the first record (112) of the received NDEF message by determining whether the second signature value (SIG-VALUE-B) and the certificate (CERTIFICATE) of the second record (113) correspond to each other,
verify the certificate of the second record (113) by applying the mobile device root certificate (122), and
provided that both the first record (112) of the received NDEF message (111) and the certificate (CERTIFICATE) of the second record (113) are verified, extract the unique resource identifier (URI) from the received NDEF message (111) and open the extracted unique resource identifier (URI) in the browser application, thereby transmitting the request to the server.

9. The system according to claim 7 or 8, wherein the server (130) is adapted to verify a request received from the mobile device (120) by determining whether the first signature value (SIG-VALUE-A) and a server certificate correspond to each other.

10. The system according to the preceding claim, wherein the server (130) comprises a server certificate database (131), and wherein the server (130) is adapted to obtain the server certificate from the server certificate database (131) based on the tag data (TAG-ID).

11. A method of generating an NDEF message in an NFC smart poster tag (110) in response to a corresponding request from a mobile device (120), the NFC smart poster tag (110) comprising a memory adapted to store tag data, a counter value, a private key (117) and a certificate corresponding to the private key (117), the NFC smart poster tag (110) further comprising a signature engine (116) adapted to generate a signature value based on selected data and the private key (117), and a message engine adapted to generate an NDEF message (111) comprising a first record (112) and a second record (113), the method comprising
copying (S2) at least a part of the tag data from the memory to the first record,
updating the counter value and storing (S3) the updated counter value (COUNTER-VALUE) in the first record (112),
calling (S4) the signature engine to calculate a first signature value (SIG-VALUE-A) based on the part of the tag data (TAG-ID) copied to the first record (112), the updated counter value (COUNTER-VALUE), and the private key (117),
storing (S5) the first signature value (SIG-VALUE-A) in the first record (112), calling (S6) the signature engine to calculate a second signature (SIG-VALUE-B) value based on the first record (112) and the private key (117),
storing (S7) the second signature value (SIG-VALUE-B) in the second record (113), and
copying the certificate (CERTIFICATE)corresponding to the private key from the memory to the second record (113).

12. A method of verifying authenticity and integrity in a smart poster system (100), the smart poster system comprising an NFC smart poster tag (110), a mobile device (120), and a server (130), the NFC smart poster tag (110) comprising a memory adapted to store tag data, a counter value, a private key (117) and a certificate corresponding to the private key (117), the NFC smart poster tag (110) further comprising a signature engine (116) adapted to generate a signature value based on selected data and the private key (117), and a message engine adapted to generate an NDEF message (111) comprising a first record (112) and a second record (113), the method comprising
transmitting (S1) a request for an NDEF message from the mobile device (120) to the NFC smart poster tag (110),
in response to receiving the request at the NFC smart poster tag (110), generating a corresponding NDEF message (111) by
copying (S2) at least a part of the tag data from the memory to the first record (112),
updating the counter value and storing (S3) the updated counter value (COUNTER-VALUE) in the first record (112),
calling (S4) the signature engine (116) to calculate a first signature value (SIG-VALUE-A) based on the part of the tag data copied to the first record (112), the updated counter value (COUNTER-VALUE), and the private key (117),
storing (S5) the first signature value (SIG-VALUE-A) in the first record (112),
calling (S6) the signature engine (116) to calculate a second signature value (SIG-VALUE-B) based on the first record (112) and the private key (116),
storing (S7) the second signature value (SIG-VALUE-B) in the second record (113), and
copying the certificate corresponding to the private key (117) from the memory to the second record (113),
transmitting (S8) the generated NDEF message (111) from the NFC smart poster tag (110) to the mobile device (120),
at the mobile device (120), verifying the NDEF message (111) received from the NFC smart poster tag (110) based on the second record (113),
extracting (S9) a unique resource identifier (URI) from the received NDEF message (111) by reading the first record (112),
generating (S9) a request to the server (130) based on the extracted unique resource identifier (URI), the request comprising the tag data (TAG-ID, OTHER-PARAMS), the updated counter value (COUNTER-VALUE) and the first signature value (SIG-VALUE-A) of the first record (112),
transmitting (S10) the generated request to the server (130), and
verifying (S11) the request at the server (130).
